Europäisches Patentamt

**European Patent Office**

Office européen des brevets

(19)

(11) Numéro de publication: **0 178 720**
**B1**

(12) # FASCICULE DE BREVET EUROPEEN

(45) Date de publication du fascicule du brevet:
**10.01.90**

(51) Int. Cl.⁴: **H 04 L 7/02**

(21) Numéro de dépôt: **85201598.1**

(22) Date de dépôt: **03.10.85**

(54) **Dispositif de réception de données numériques comportant un dispositif de récupération adaptative de rythme.**

(30) Priorité: **09.10.84 FR 8415483**

(43) Date de publication de la demande:
**23.04.86 Bulletin 86/17**

(45) Mention de la délivrance du brevet:
**10.01.90 Bulletin 90/2**

(84) Etats contractants désignés:
**BE CH DE FR GB IT LI NL SE**

(56) Documents cités:
**US-A- 3 868 603**
**US-A- 3 879 664**

**ICC' 84 PROCEEDINGS OF THE 1984 INTERNATIONAL CONFERENCE ON COMMUNICATIONS, vol. 2, Rai Congress Centre, Amsterdam, 14-17 mai 1984, pages 653-656, North-Holland Publishers, New York, US; G.H. NIEZGODA et al.: "Further results on the dispersive fade performance of a 49QPRS 90Mb/s digital radio"**
**IBM JOURNAL OF RESEARCH & DEVELOPMENT, vol. 25, no. 1, janvier 1981, pages 17-24, Armonk, New York, US; D. GODARD et al.: "A 2400-Bit/s microprocessor-based modem"**
**IEEE TRANSACTIONS ON COMMUNICATIONS, vol. COM-32, no. 4, avril 1984, pages 429-443, IEEE, New York, US; G.R. McMILLIN et al.: "Simultaneous adaptive**

(73) Titulaire: **LABORATOIRES D'ELECTRONIQUE ET DE PHYSIQUE APPLIQUEE L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **BE CH DE GB IT LI NL SE**

(72) Inventeur: **Sari, Hikmet, Société Civile S.P.I.D. 209, rue de l'Université, F-75007 Paris (FR)**
Inventeur: **Desperben, Lydie, Société Civile S.P.I.D. 209, rue de l'Université, F-75007 Paris (FR)**

(74) Mandataire: **Landousy, Christian et al, Société Civile S.P.I.D. 209, Rue de l'Université, F-75007 Paris (FR)**

(56) Documents cités: (suite)
**estimation of carrier phase, symbol timing, and data for a 49-QPRS DFE radio receiver"**
**NACHRICHTENTECHNISCHE ZEITSCHRIFT, vol. 27, no. 6, 1974, pages 225-229, Berlin, DE; H. Selim: "Die Optimierungsaufgabe des Abtastzeitpunktes beim adaptiven Transversalfilter-Entzerrer"**

## Description

L'invention concerne un dispositif de réception de données numériques qui s'adapte aux variations du canal d'un système de transmission, comprenant un étage adaptatif de réception, ayant un égaliseur adaptatif et au moins un échantillonneur, l'étage adaptatif de réception délivrant, avec un certain cadencement, des échantillons complexes $y_k$ à partir du signal d'entrée x(t), un organe de décision délivrant des symboles complexes détectés $a_k$, un dispositif de récupération adaptative de rythme qui détermine l'instant optimal d'échantillonnage en minimisant une fonction quadratique J traduisant l'écart entre $y_k$ et $a_k$ et un oscillateur délivrant une horloge primaire.

Les performances des systèmes de transmission numérique à grande vitesse, qui utilisent à la réception un égaliseur adaptativ avec des prises de coefficient espacées d'une durée symbole pour compenser les distorsions linéaires du canal, dépendent fortement de l'instant d'échantillonnage. Un mauvais choix de celui-ci peut se traduire par un spectre nul près du bord de bande du spectre du signal échantillonné, auquel cas l'égalisation du canal devient difficile.

Les égaliseurs adaptatifs utilisent typiquement le critère de l'erreur quadratique moyenne minimale pour s'adapter au canal. L'instant d'échantillonnage est choisi en sortie d'égaliseur en minimisant une fonction quadratique J qui, également et préférentiellement, peut être l'erreur quadratique moyenne.

Une structure d'égaliseur adaptatif pour des systèmes de transmission à haut-débit a été décrite par H. KOBAYASHI dans «Simultaneous Adaptive Estimation and Decision Algorithm for Carrier Modulated Data Transmission Systems», IEEE Transactions on Communication Technology, Vol. COM-19, n° 3, pp. 268–280, june 1971.

Cet auteur décrit une structure de récepteur, dans lequel les récupérations de rythme et de porteuse, ainsi que l'adaptation de l'égaliseur numérique, sont effectués à l'aide d'un critère d'erreur quadratique moyenne minimale. Dans cette structure, le signal est tout d'abord démodulé puis échantillonné puis traité par l'égaliseur adaptatif. Mais pour effectuer la récupération de rythme assurant une phase optimale d'échantillonnage, dans la structure de récepteur donnée par H. KOBAYASHI, le signal d'entrée x(t) est d'abord dérivé et est ensuite traité en parallèle avec la voie principale selon les mémes principes, par un autre échantillonneur et un autre égaliseur adaptatif ayant des caractéristiques identiques à celles de l'égaliseur adaptatif principal. Un dispositif de corrélation est ensuite placé en sortie de la boucle de récupération de rythme pour minimiser la fonction d'erreur quadratique moyenne choisie et intervenir sur la phase de l'instant d'échantillonnage.

Dans une situation concrète cette structure s'avère difficile à mettre en œuvre car elle se traduit en fait par un doublement de la complexité du récepteur.

On connaît également le document US-A 3868603 qui décrit un égaliseur adaptatif qui opère également une récupération de rythme en minimisant l'erreur quadratique moyenne. Cette document reprend les caractéristiques décrites dans l'article de H. KOBAYASHI (opération sur le signal d'entrée et sa dérivée) en apportant une variante qui a pour objet de réduire le matériel utilisé. Pour cela il utilise un seul égaliseur au lieu de deux égaliseurs et fait opérer cet égaliseur unique à une cadence double de l'émission des symboles.

Le but de l'invention est d'effectuer la récupération du rythme sans doubler la complexité du circuit, en n'effectuant pas le calcul puis le traitement du signal de dérivée de x(t).

Pour cela, l'invention telle que définie dans le préambule est remarquable en ce que le dispositif adaptatif de réception comporte un dispositif de récupération adaptative de rythme qui comprend:

– des moyens de mise en forme de l'horloge primaire selon une horloge secondaire dont la période vaut deux fois celle de l'horloge primaire, et dont les fronts de montée successifs sont espacés dans le temps de $T_1$ et $T_2$, ladite horloge secondaire fournissant alternativement deux instants d'échantillonnage $\tau$ et $\tau+\Delta\tau$, où $\tau$ est l'instant d'échantillonnage de l'horloge primaire et $\Delta\tau$ est une constante,

– des moyens de calcul approché de la fonction quadratique J et du signe de ses variations entre les instants $\tau$ et $\tau+\Delta\tau$,

– et des moyens de correction de la phase de l'horloge primaire selon la signe des variations de la fonction quadratique J.

Les dispositifs de réception des systèmes de transmission de données comportent un démodulateur fournissant un signal en bande de base x(t). Ce signal après avoir été traité dans un étage de réception par un échantillonneur et un égaliseur adaptatif fournit des échantillons $y_k$, qui dans le cas général sont complexes. Ces échantillons $y_k$ passent ensuite dans un organe de décision qui fournit des symboles détectés $a_k$. Mais selon l'instant d'échantillonnage l'erreur commise en déterminant les symboles détectés $a_k$ peut être importante. Pour réduire cette erreur on choisit une fonction J traduisant l'écart entre les échantillons $y_k$ et les symboles $a_k$. On détermine le gradient de cette fonction J par rapport à l'instant d'échantillonnage $\tau$ soit

$$\frac{\partial J}{\partial \tau}$$

et on minimise ce gradient en intervenant sur l'instant d'échantillonnage.

Une première fonction quadratique J est par exemple l'erreur quadratique moyenne

$$(1)\ J = E\left\{\ |e_k|^2\right\}$$

de l'erreur $e_k$ telle que $e_k = y_k - a_k$ où le symbole $|.|$ représente le module et le symbole $E\{.\}$ représente la valeur moyenne.

Pour minimiser J on utilise une version stochastique de l'algorithme du gradient. Le gradient de J:

$$(2) \quad g_k = \frac{\partial E\{|e_k|^2\}}{\partial \tau}$$

n'est pas disponible, mais un estimateur non biaisé de celui-ci est

$$(3) \quad \hat{g}_k = \frac{|e_k(\tau_k + \Delta\tau)|^2 - |e_{k-1}(\tau_{k-1})|^2}{\Delta\tau}$$

où $\Delta\tau$ est un faible écart, et où $\tau_k$ et $\tau_{k-1}$, tels que $|\tau_k - \tau_{k-1}| \ll \Delta\tau$ sont respectivement deux instants d'échantillonnage consécutifs de l'horloge primaire, déduit l'un de l'autre par l'asservissement décrit ci-après selon la relation (7).

A partir de cet estimateur du gradient on construit la fonction continue g(t) définie par

$$(4) \quad g(t) = \text{Sgn}(\hat{g}_k) \text{ si } t\varepsilon|kT, (k+1)T|$$

où T est la durée symbole de la transmission et Sgn(.) désigne la fonction de signe.

En fait, la fonction Sgn(.) a été introduite pour simplifier la réalisation, mais ne constitue aucune limitation à l'invention. Le signal g(t) après filtrage passe-bas, commande un oscillateur délivrant l'horloge primaire.

La sortie du filtre passe-bas est $\varepsilon(t) = f(t) * g(t)$ où f(t) désigne la réponse impulsionnelle du filtre, et l'astérisque désigne l'opération de convolution. Dans le cas sans filtrage l'équation se réduit à: $\varepsilon(t) = g(t)$.

En pratique, on utilise un filtre passe-bas afin d'avoir un meilleur compromis entre les performances pendant la période d'acquisition et à l'état permanent. Ce filtre, appelé filtre du boucle, fait partie du genre classique de filtres utilisés dans les boucles à verrouillage de phase qui sont connus de l'homme de l'art.

Le signal $\varepsilon(t)$ commande l'oscillateur délivrant l'horloge primaire, dont la phase $\Phi(t)$ varie selon la relation

$$(5) \quad \Phi(t) = -K.\varepsilon(t)$$

où K est le gain de l'oscillateur.

La variation de phase pendant la k ième durée symbole de l'horloge primaire délivrée par cet oscillateur va être

$$(6) \quad \Delta\Phi_k = -K \int_{kT}^{(k+1)T} \varepsilon(t).dt.$$

En pratique, cette variation sera faible par rapport à $\Delta\tau$. Ainsi, les deux instants successifs $\tau_{k+1}$ et $\tau_k$ sont liés par la relation

$$(7) \quad \tau_{k+1} = \tau_k - K \int_{kT}^{(k+1)-} \varepsilon(t).dt.$$

Une seconde fonction quadratique J est par exemple:

$$(8) \quad J = E\{f_k^2\}$$

où $f_k = |y_k|^2 - |a_k|^2$ avec les mêmes notations que précédemment.

De la même façon que pour la relation (3) on obtient la relation:

$$(9) \quad \hat{g}_k = \frac{f^2 g_k(\tau_k + \Delta\tau) - {}^2d2k_{-1}(\tau_{k-1})}{\Delta\tau}$$

La relation (7) reliant entre eux les instants successifs $\tau_{k+1}$ et $\tau_k$ peut être utilisée en remplaçant dans la relation (4) le terme $g_k$ par la relation (9).

Selon l'invention on effectue l'opération d'échantillonnage avec deux instants d'échantillonnage successifs, ce qui a pour but de faire apparaître en écart pratiquement constant, $\tau_k + \Delta\tau - \tau_{k-1} \simeq \Delta\tau$, dans les acquisitions successives des échantillons. Ainsi aux instants $\tau_{k-1}$ et $\tau_k + \Delta\tau$ apparaissent les erreurs successives $e_{k-1}$ et $e^{\Delta}d2k$ selon la première fonction quadratique, ou $f_{k-1}$ et $f^{\Delta}d2k$ selon la seconde fonction quadratique, permettant de déterminer les instants d'échantillonnage consécutifs à l'aide de la relation (7) et respectivement des relations (3) ou (9). Ceci s'effectue en corrigeant la phase de l'horloge primaire par un signal dépendant du signe des expressions des relations (3) ou (9). L'horloge primaire ainsi corrigée est ensuite mise en forme pour fournir l'horloge secondaire qui agit sur le fonctionnement de l'échantillonneur.

Selon un premier mode de réalisation le dispositif adaptatif de réception comprend, entre autres, des moyens délivrant l'horloge secondaire qui agit sur un échantillonneur, suivi d'un égaliseur adaptatif numérique.

Selon un second mode de réalisation le dispositif adaptatif de réception comprend, entre autres, des moyens délivrant l'horloge secondaire qui agit sur un échantillonneur précédé d'un égaliseur adaptatif analogique.

Selon un troisième mode de réalisation le dispositif adaptatif de réception comprend, entre autres, des moyens délivrant l'horloge secondaire, qui dans ce cas se dédouble en deux horloges décalées dans le temps, qui agit sur deux échantillonneurs précédés d'un égaliseur adaptatif analogique.

L'invention sera mieux comprise à l'aide des figures suivantes qui représentent:

Fig. 1 un schéma d'un dispositif adaptatif de réception selon l'invention;

fig. 2 un diagramme de séquences d'horloges;

fig. 3 un schéma pour la génération de l'horloge secondaire;

fig. 4 un schéma de réalisation des moyens de correction de la phase de l'horloge primaire;

fig. 5 un schéma de réalisation des moyens de détermination du signe des variations de la fonction quadratique J, lorsqu'on ne prend en compte que la partie réelle $e'_k$ de $e_K$, et lorsque les parties réelles sont positives pour deux instants consécutifs;

fig. 6 un schéma de réalisation de l'étage adaptatif de réception dans le cas d'un égaliseur adaptatif numérique;

fig. 7 un schéma de réalisation de l'étage adaptatif de réception dans le cas d'un égaliseur adaptatif analogique;

fig. 8 un schéma de dispositif adaptatif de réception dans le cas d'un égaliseur adaptatif analogique, où l'horloge secondaire est dédoublée en deux horloges décalées dans le temps.

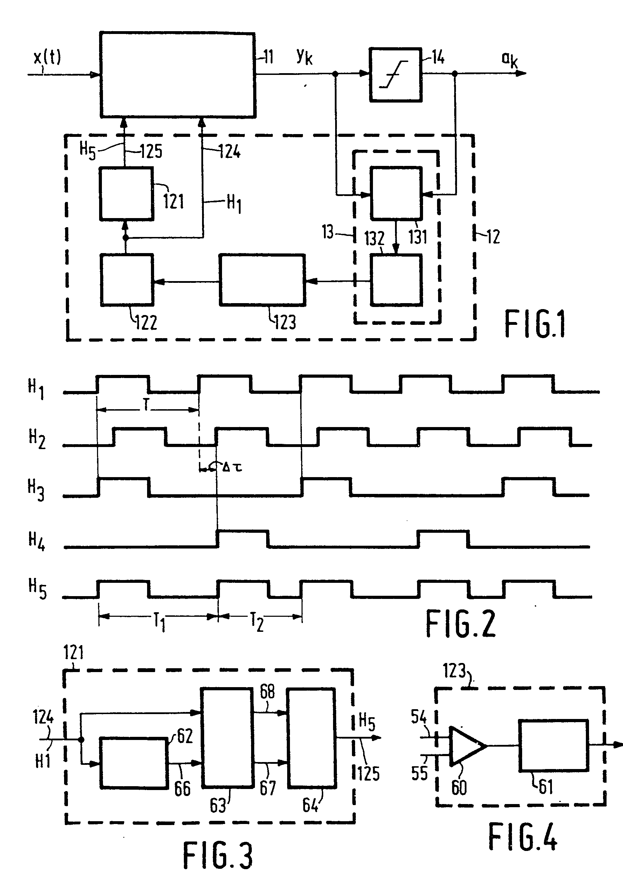

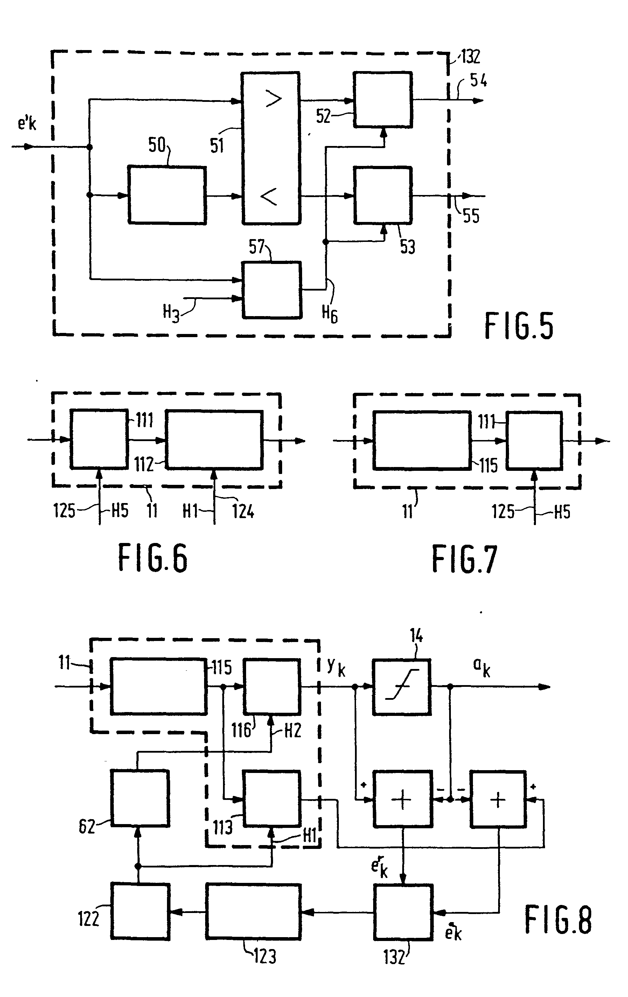

La fig. 1 représente un dispositif adaptatif de réception selon l'invention dans un mode préférentiel de réalisation correspondant au cas d'un traitement numérique. Le signal en bande de base $x(t)$, qui peut être complexe, entre dans l'étage adaptatif de réception 11 suivi d'un organe de décision 14. Un dispositif de récupération adaptative de rythme 12 détermine, à partir des échantillons $y_k$ et des symboles détectés $a_k$, le rythme de fonctionnement de l'étage adaptatif de réception 11. Dans ce mode préférentiel l'étage adaptatif de réception 11 est constitué, selon la fig. 6, d'un échantillonneur 111, qui est alors un convertisseur analogique-numérique, suivi d'un égaliseur adaptatif numérique 112. L'étage adaptatif de réception 11 (fig. 1) délivre des échantillons $y_k$ qui peuvent être complexes. Ceux-ci grâce à l'organe de décision 14, fournissent les symboles détectés $a_k$. L'opération de décision conduit à l'apparition d'erreurs entre les séquences des échantillons $y_k$ et les séquences de symboles détectés $a_k$. On détermine alors l'écart entre les séquences $y_k$ et les séquences $a_k$ et on calcule une fonction quadratique J de cet écart dont on détermine le signe de ses variations successives. Les moyens de calcul 13 reçoivent les séquences $y_k$ et $a_k$ et déterminent la fonction J dans le premier moyen de calcul 131 puis le signe des variations de la fonction J dans le second moyen de calcul 132. Selon le signe de ces variations, des moyens de correction 123 délivrent un signal de correction qui agit sur l'oscillateur 122. Celui-ci délivre une horloge primaire, sur la connexion 124, à l'étage adaptatif de réception 11 ainsi qu'aux moyens de mise en forme 121 qui donnent l'horloge secondaire.

Sur la fig. 2 sont représentées les séquences d'horloge indiquant un exemple de mécanisme de formation de l'horloge secondaire à partir de l'horloge primaire. Sur la fig. 3 est donné un exemple de schéma réalisant cette formation des horloges. L'horloge primaire (connexion 124, horloge H1) est retardée dans l'élément de retard 62 pour donner l'horloge H2 en sortie 66. Le dispositif de sélection 63 élimine alternativement une période sur deux de chacune des horloges pour donner sur les sorties 67 et 68 respectivement les horloges H3 et H4. Celles-ci sont alors combinées (64) pour fournir l'horloge secondaire (horloge H5, connexion 125) dont la période vaut deux fois celle de l'horloge primaire et dont les fronts de montée successifs sont espacés dans le temps de $T_1$ et $T_2$, ladite horloge secondaire fournissant deux instants d'échantillonnage $\tau$ et $\tau+\Delta\tau$. Ceci revient à dire que par rapport à la période régulière T de l'horloge primaire (horloge H1), la période $T_1$ est plus longue de $\Delta\tau$, et que la période $T_2$ est plus courte de la même valeur.

Dans le cas où la fonction quadratique J est définie par les relations (1) ou (8), les moyens de calcul 13 sont constitués d'une mémoire statique, stockant les valeurs préalablement calculées du signe des variations de la fonction quadratique J pour tous les couples de valeurs complexes prévisibles $y_k$ et $a_k$, mémoire qui est lue en l'adressant avec les valeurs complexes de $y_k$ et de $a_k$ déterminées.

Mais dans le cas où la fonction J est définie par la relation (1) il est également possible que le premier moyen de calcul 131 soit formé d'un soustracteur effectuant le calcul de $e_k = y_k - a_k$ et d'un dispositif d'élévation au carré par exemple un multiplieur. On peut également ne prendre pour la fonction J, lorsqu'elle est positive, que la partie réelle de $e_k$ que l'on appelle $e'_k$. Dans ce second cas le signe des variations de la fonction J est déterminé dans le second moyen de calcul 132. Celui-ci est par exemple celui représenté sur la fig. 5. Pour cela l'information issue du premier moyen de calcul 131 entre dans un élément retardateur 50 et dans une entrée d'un comparateur 51. L'autre entrée du comparateur 51 reçoit, en voie directe, la sortie du premier moyen de calcul 131. Ainsi sur les entrées du comparateur 51 arrivent simultanément l'information $e'_{k-1}$ retardée et l'information suivante $e'_k$ non retardée. Le comparateur dispose de deux sorties qui passent respectivement à l'état actif lorsque $e'_{k-1} < e'_k$ ou $e'_{k-1} > e_k$. Les états actif ou non-actif de ces sorties sont stockés dans deux éléments mémoire 52, 53, validés par l'horloge H6 obtenue en ne validant les fronts de montée de l'horloge H3 que lorsque les signes respectifs de $e'_k$ et $e'_{k-1}$ sont tous deux positifs. Ceci s'effectue dans l'élément de validation 57. Les sorties 54 et 55 de ces éléments mémoire agissent sur les moyens de correction 123 de l'horloge primaire. Ceux-ci, tels qu'indiqués sur la fig. 4, sont par exemple constitués d'un amplificateur opérationnel 60 suivi d'un filtre passe-bas 61. L'amplificateur opérationnel 60 est par exemple le modèle LF 356 de la Société SIGNETICS. Les caractéristiques du filtre passe-bas 61 sont déterminées de façon à définir la plage d'accrochage et à limiter le bruit de phase de l'oscillateur. La correction agit sur l'oscillateur 122 qui est par exemple l'oscillateur n° MC 1648 de la Société MOTOROLA qui délivre sur sa sortie 124 l'horloge primaire H1, ayant une fréquence par exemple de 35 MHz.

Selon un second mode de réalisation l'étage adaptatif de réception 11 est constitué selon la fig. 7 d'un égaliseur adaptatif analogique 115 suivi d'un échantillonneur 111.

Selon un troisième mode de réalisation tel que représenté sur la fig. 8, l'étage adaptatif de réception 11 est constitué d'un égaliseur adaptatif analogique 115 suivi sur une voie d'un premier échantillonneur 116 et sur une autre voie d'un second échantillonneur 113. Tous les éléments identiques à ceux de la fig. 1 sont indiqués avec les mêmes références. Les moyens de mise en forme 121 de l'horloge primaire se réduisent dans ce cas à l'élément retardateur 62 de la fig. 3. Les horloges d'échantillonnage sont alors les horloges H1 et H2 représentées sur la fig. 2 qui apparaissent sur les connexions 124 et 66 de la fig. 3. Ces horloges d'échantillonnage agissent chacune respectivement sur les échantillonneurs 113 et 116. Tous les autres mécanismes de fonctionnement sont semblables à ceux décrits dans le cas du premier mode de réalisation. L'erreur $e^a_k$ (respectivement $e^r_k$) est l'écart entre l'échantillon en sortie de l'échantillonneur 113 (respectivement 116) et le symbole décidé à l'instant k.

**Revendications**

1. Dispositif de réception de données numériques qui s'adapte aux variations du canal d'un système de transmission, comprenant un étage adaptatif de réception (11), ayant un égaliseur adaptatif (112, 113) et au moins un échantillonneur (111) (113, 116), l'étage adaptatif de réception délivrant, avec un certain cadencement, des échantillons complexes $y_k$ à partir du signal d'entrée x(t), on organe de décision (14) délivrant des symboles complexes détectés $a_k$, un dispositif de récupération adaptative de rythme (12) qui détermine l'instant optimal d'échantillonnage en minimisant une fonction quadratique J traduisant l'écart entre $y_k$ et $a_k$ et un oscillateur (122) délivrant une horloge primaire, caractérisé en ce que le dispositif de récupération adaptative de rythme (12) comprend:
— des moyens de mise en forme (121) de l'horloge primaire selon une horloge secondaire dont la période vaut deux fois celle de l'horloge primaire, et dont les fronts de montée successifs sont espacés dans le temps de $T_1$ et $T_2$, ladite horloge secondaire fournissant alternativement deux instants d'échantillonnage $\tau$ et $\tau+\Delta$, où $\tau$ est l'instant d'échantillonnage de l'horloge primaire et $\Delta\tau$ est une constante,
— des moyens de calcul (131) approché de la fonction quadratique J et du signe (132) de ses variations entre les instants $\tau$ et $\tau+\Delta\tau$,
— et des moyens de correction (123) de la phase de l'horloge primaire selon le signe des variations de la fonction quadratique J.

2. Dispositif adaptatif de réception selon la revendication 1, caractérisé en ce que les moyens de calcul (13) de la fonction quadratique J et du signe de ses variations sont constitués d'une mémoire statique, stockant les valeurs préalablement calculées du signe des variations de la fonction quadratique J pour tous les couples de valeurs complexes prévisibles $y_k$ et $a_k$, mémoire qui est lue en l'adressant avec les valeurs complexes de $y_k$ et de $a_k$ déterminées.

3. Dispositif adaptatif de réception selon la revendication 1, dans le cas où la fonction quadratique J est la valeur quadratique moyenne $J = E\{|e_k|^2\}$ de l'erreur $e_k = y_y - a_k$, où $|e_k|$ désigne le module de $e_k$ et le symbole $E\{.\}$ indique la valeur moyenne, et dans le cas où les variations de J sont déterminées à partir de la partie réelle de $e_k$ et uniquement aux instants où la partie réelle est positive à deux instants successifs, caractérisé en ce que les moyens de calcul (13) de la fonction quadratique J et du signe de ses variations sont constitués:
— d'un soustracteur recevant sur ses entrées les échantillons complexes $y_k$ et les symboles détectés $a_k$ et donnant en sortie $e_k = y_k - a_k$,
— un élément retardateur (50) de la partie réelle $e'_k$ de l'erreur $e_k$ de la valeur d'une période de l'horloge primaire,
— un comparateur (51) recevant simultanément les erreurs $e'_{k-1}$ de la voie retardée et les erreurs $e'_k$ de la voie directe, et deux éléments mémoire (52, 53) stockant le résultat de la comparaison entre $e'_{k-1}$ et $e'_k$ sous le contrôle d'un élément de validation,
— un élément de validation (57) qui ne valide une horloge, déduite de l'horloge primaire en éliminant une période sur deux, que lorsque les valeurs de $e'_{k-1}$ et de $e'_k$ sont toutes deux positives.

4. Dispositif adaptatif de réception selon l'une des revendications 1 à 3, caractérisé en ce que l'horloge secondaire agit sur un échantillonneur (111), constitué d'un convertisseur analogique-numérique qui est suivi d'un égaliseur adaptatif numérique (112).

5. Dispositif adaptatif de réception selon l'une des revendications 1 à 3, caractérisé en ce que l'horloge secondaire agit sur un échantillonneur (111) précédé d'un égaliseur adaptatif analogique (115).

6. Dispositif adaptatif de réception selon l'une des revendications 1 à 3, caractérisé en ce que l'horloge secondaire se dédouble en deux horloges décalées dans le temps et agit sur deux échantillonneurs (113, 116) précédés d'un égaliseur adaptatif analogique (115).

**Patentansprüche**

1. Einrichtung zum Empfang digitaler Daten, die sich selbst an Änderungen des Kanals eines Übertragungssystems anpaßt, mit einer adaptiven Empfangsstufe (11), die eine adaptive Entzerrungsschaltung (112, 115) und wenigstens eine Abtastschaltung (111) (113, 116) aufweist, wobei die adaptive Empfangsstufe mit einer bestimmten Frequenz komplexe Abtastwerte $y_k$ vom Eingangssignal x(t) liefert, weiterhin mit einem Entscheidungskreis (14), der detektierte komplexe Symbole $a_k$ liefert, und mit einer adaptiven Taktrückgewinnungsschaltung (12), die den optimalen Abtastzeitpunkt dadurch bestimmt, dass eine quadratische Funktion J, welche die Differenz zwischen $y_k$ und $a_k$ darstellt, minimiert wird, und mit einem Oszillator (122), der ein primäres Taktsignal liefert, dadurch gekennzeichnet, daß die adaptive Taktrückgewinnungsschaltung (12) die folgenden Elemente aufweist:
— Pulsformmittel (121) für das primäre Taktsignal zur Formgebung entsprechend einem zweiten Taktsignal, dessen Periode der doppelten Periode des primären Taktsignales entspricht und dessen aufeinanderfolgende Anstiegsflanken um $T_1$ und $T_2$ zeitlich getrennt sind, wobei dieses zweite Taktsignal abwechselnd zwei Abtastzeitpunkte $\tau$ und $\tau+\Delta\tau$ liefert, wobei $\tau$ der Abtastzeitpunkt des primären Taktsignals und $\Delta\tau$ eine Konstante ist,

– Mittel (131) zum annähernden Berechnen der quadratischen Funktion J und des Vorzeichens (132) ihrer Änderungen zwischen den Zeitpunkten $\tau$ und $\tau+\Delta\tau$, und

– Mittel (123) zum Korrigieren der Phase des primären Taktsignales entsprechend dem Vorzeichen der Änderungen der quadratischen Funktion J.

2. Adaptive Empfangseinrichtung nach Anspruch 1, dadurch gekennzeichnet, daß die Mittel (13) zum Berechnen der quadratischen Funktion J und des Vorzeichens ihrer Änderungen durch einen statischen Speicher gebildet werden, in dem die vorher berechneten Werte des Vorzeichens der Änderungen der quadratischen Funktion J für alle vorhersehbaren Paare komplexer Werte $y_k$ und $a_k$ gespeichert sind, wobei dieser Speicher dadurch gelesen wird, dass er mit den bestimmten komplexen Werten von $y_k$ und $a_k$ adressiert wird.

3. Adaptive Empfangseinrichtung nach Anspruch 1, für den Fall, in dem die quadratische Funktion J der mittlere quadratische Wert $J = E\{|e_k|^2\}$ des Fehlers $e_k = y_k-a_k$ ist, wobei $|e_k|$ den Absolutwert von $e_k$ bezeichnet und das Symbol $E\{.\}$ den mittleren Wert angibt, und für den Fall, in dem die Änderungen von J aus dem reellen Teil von $e_k$ und ausschließlich zu denjenigen Zeitpunkten bestimmt werden, an denen der reelle Teil an zwei aufeinanderfolgenden Zeitpunkten positiv ist, dadurch gekennzeichnet, daß die Mittel (13) zum Berehnen der quadratischen Funktion J und des Vorzeichens ihrer Änderungen durch die folgenden Elemente gebildet werden:

– einen Subtrahierer, der an seinen Eingängen die komplexen Abtastwerte $y_k$ und die detektierten Symbole $a_k$ enthält und an dem Ausgang $e_k = y_k-a_k$ liefert,

– ein Verzögerungselement (50) für den reellen Teil $e'_k$ des Fehlers $e_k$ zur Verzögerung um eine Periode des primären Taktsignals,

– eine Vergleichsschaltung (51), die gleichzeitig die Fehler $e'_{k-1}$ der verzögerten Strecke und die Fehler $e'_k$ der direkten Strecke erhält, sowie zwei Speicherelemente (52, 53), die das Ergebnis des Vergleiches von $e'_{k-1}$ mit $e'_k$ unter Ansteuerung eines Gültigkeitselementes speichern,

– ein Gültigkeitselement (57), das ein Taktsignal, das von dem primären Taktsignal durch Eliminierung jeder zweiten Periode abgeleitet wird, nur dann für gültig erklärt, wenn die Werte von $e'_{k-1}$ und $e'_k$ beide positiv sind.

4. Adaptive Empfangseinrichtung nach einem der Ansprüche 1 bis 3, dadurch gekennzeichnet, daß das sekundäre Taktsignal eine Abtastschaltung (111) steuert, die durch einen Analog-Digital-Wandler gebildet wird, dem ein digitaler adaptiver Entzerrer (112) folgt.

5. Adaptive Empfangseinrichtung nach einem der Ansprüche 1 bis 3, dadurch gekennzeichnet, daß das sekundäre Taktsignal eine Abtastschaltung (111) steuert, der ein analoger adaptiver Entzerrer (115) vorgeschaltet ist.

6. Adaptive Empfangseinrichtung nach einem der Ansprüche 1 bis 3, dadurch gekennzeichnet, daß das sekundäre Taktsignal in zwei zeitverschobene Taktsignale aufgeteilt ist, die zwei Abtastschaltungen (113, 116) steuern, denen ein analoger adaptiver Entzerrer (115) vorgeschaltet ist.

**Claims**

1. An arrangement for receiving digital data which adapts itself to channel variations of a transmission system, comprising an adaptive receiving stage (111), which incorporates an adaptive equalizer (112, 113) and at least one sampler (111) (113, 116), the adaptive receiving stage producing, at a certain rate, complex samples $y_k$ from the input signal x(t), a decision circuit (14) supplying detected complex symbols $a_k$, and an adaptive timing recovery arrangement (12) determining the optimum sampling instant by minimizing a quadratic function J which represents the difference between $y_k$ and $a_k$, and an oscillator (122) supplying a primary clock, characterized in that the adaptive timing recovery circuit (12) comprises:

– means for shaping (121) the primary clock in accordance with a secondary clock whose periode is twice the period of the primary clock and whose consecutive ascending edges are spaced in time by $T_a$ and $T_2$, said secondary clock producing alternately two sampling instants $\tau$ and $\tau+\Delta\tau$, where $\tau$ is the sampling instant of the primary clock and $\Delta\tau$ is a constant,

– means for approximately calculating (131) the quadratic function J and the sign (132) of its variations between the instants $\tau$ and $\tau+\Delta\tau$, and

– means for correcting (123) the phase of the primary clock in accordance with the sign of the variations of the quadratic function J.

2. An adaptive receiver arrangement as claimed in claim 1, characterized in that the means for calculating (13) the quadratic function J and the sign of its variations are constituted by a static memory, in which the previously calculated values of the sign of the variations of the quadratic function J are stored for all the pairs of foreseeable complex values $y_k$ and $a_k$, the memory being read by addressing it with the determined complex values of $y_k$ and $a_k$.

3. An adaptive receiver arrangement as claimed in claim 1, for the case in which the quadratic function J is the mean square value $J = E\{|e_k|^2\}$ of the error $e_k = y_l - a_k$, where $|e_k|$ designates the modulus of $e_k$ and the symbol $E\{.\}$ indicates the mean value, and for the case in which the variations of J are determined from the real part of $e_k$ and exclusively at the instants at which the real part is positive at two consecutive instants, characterized in that the means for calculating (13) the quadratic function J and the sign of its variations are constituted by:

– a subtracter receiving at its inputs the complex samples $y_k$ and the detected symbols $a_k$ and producing at its output $e_k = y_k - a_k$,

– a delay element (50) for the real part $e'_k$ of the error $e_k$ producing a delay of one period of the primary clock,

– a comparator (51) receiving simultaneously the errors $e'_{k-1}$ of the delayed path and the errors $e'_k$ of the direct path, and two memory elements (52, 53) storing the result of comparing $e'_{k-1}$ with $e'_k$ under the control of a validation element,

– a validation element (57) which only validates a clock derived from the primary clock by eliminating one period out of two when the values of $e'_{k-1}$ and $e'_k$ are both positive.

4. An adaptive receiver arrangement as claimed in one of the claims 1 to 3, characterized in that the secondary clock controls a sampler (111), constituted by an analog-to-digital converter, which is followed by a digital adaptive equalizer (112).

5. An adaptive receiver arrangement as claimed in one of the claims 1 to 3, characterized in that the secondary clock controls a sampler (111), which is preceded by an analog adaptive equalizer (115).

5. An adaptive receiver arrangement as claimed in one of the claims 1 to 3, characterized in that the secondary clock is split into two time-shifted clocks controlling two samplers (113, 116) which are preceded by an analog adaptive equalizer (115).

FIG.1

FIG.2

FIG.3

FIG.4

FIG.5

FIG.6

FIG.7

FIG.8